(19) Europäisches Patentamt
European Patent Office
Office européen des brevets

(11) EP 2 619 357 B1

# (12) EUROPEAN PATENT SPECIFICATION

(45) Date of publication and mention of the grant of the patent:
**28.08.2019 Bulletin 2019/35**

(21) Application number: **11757901.1**

(22) Date of filing: **21.09.2011**

(51) Int Cl.:
***D01F 6/04*** (2006.01) ***D01D 5/42*** (2006.01)
***D06N 7/00*** (2006.01) ***E01C 13/08*** (2006.01)

(86) International application number:
**PCT/EP2011/066428**

(87) International publication number:
**WO 2012/038471 (29.03.2012 Gazette 2012/13)**

## (54) ARTIFICIAL GRASS

KUNSTRASEN

GAZON SYNTHÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2010 EP 10178818**
**15.12.2010 EP 10195054**

(43) Date of publication of application:
**31.07.2013 Bulletin 2013/31**

(73) Proprietor: **Total Research & Technology Feluy**
**7181 Seneffe (BE)**

(72) Inventor: **LUIJKX, Romain**
**B-7521 Chercq (BE)**

(74) Representative: **Raboin, Jean-Christophe et al**
**Total Research & Technology Feluy**
**Zone Industrielle C**
**7181 Seneffe (BE)**

(56) References cited:
**EP-A1- 1 469 104** **WO-A1-2008/113680**
**WO-A1-2009/059971** **WO-A1-2009/101124**
**WO-A1-2013/007619**

- **WANG W-J ET AL: "LONG CHAIN BRANCHING IN ETHYLENE POLYMERIZATION USING CONSTRAINED GEOMETRY METALLOCENE CATALYST", MACROMOLECULAR CHEMISTRY AND PHYSICS, WILEY-VCH VERLAG, WEINHEIM, DE, vol. 199, no. 11, 1 November 1998 (1998-11-01), pages 2409-2416, XP000802214, ISSN: 1022-1352**
- **"Plastics - Methods for determining the density of non-cellular plastics - Part 1: Immersion method, liquid pyknometer method and titration method", INTERNATIONAL STANDARD ISO 1183-1, 2004, pages 1-14, XP009155812, Geneva**
- **"Plastics - Methods for determining the density of non-cellular plastics - Part 2: Density gradient column method", INTERNATIONAL STANDARD ISO 1183-2, 2004, pages 1-15, XP009155813, Geneva**
- **"Plastics - Methods for determining the density of non-cellular plastics - Part 3: Gas pyknometer method", INTERNATIONAL STANDARD ISO 1183-3, 1999, pages 1-13, XP009155814, Geneva**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 619 357 B1

**Description**

FIELD OF THE INVENTION

The present invention relates to polymers and in particular to linear low density polyethylenes (LLDPE) and medium density polyethylenes (MDPE) and to yarn made thereof, in particular to slit film and monofilaments suitable for tufting into artificial grass or also known as artificial turf.

BACKGROUND OF THE INVENTION

Historically, first polypropylene, then HDPE, were used for making monofilaments and slit film in the field of artificial grass. However, more recently, LLDPE and MDPE have become the material of choice due to their superior softness. Conventionally, Ziegler-Natta copolymers of ethylene and 1-octene are used.

In recent years there have been many advances in the production of polyolefins due to the introduction of metallocene catalysts. Because of their single-site nature the polyolefin copolymers produced by metallocene catalysts often are quite uniform in their molecular structure. For example, in comparison to traditional Ziegler-Natta catalysed polyethylenes, they have relatively narrow molecular weight distributions (MWD) and narrow Short Chain Branching Distribution (SCBD).

Certain properties of metallocene catalysed polyethylenes are enhanced by narrow MWD and these materials may be manufactured into useful articles. However for some applications the uniform nature of the SCBD of metallocene produced materials may not readily permit certain structures to be obtained.

Monofilaments have a variety of geometries e.g. circular, flat, elliptical, double diamond shape etc., which may define the final properties such as softness, abrasion and the like. For example when used for artificial grass applications producers optimize this shape in order to provide the required balance of properties. The best are those that do not show area with a very small radius (weakness points creating splitting) and that do not have sharp edges e.g. double diamond, C-shaped, and elliptical.

Generally monofilaments may be manufactured by a melt spinning process with their sizes ranging from 0.1 to 2.5 mm in diameter depending on the intended end use. Polyethylenes have been typically used as raw materials for making monofilaments.

Slit films are prepared from a primary film produced by a blown or a cast film process. The film may be cut into tapes and then oriented typically by stretching the film while passing through an air oven or on a hot plate at a temperature below the melting point.

Synthetic or artificial turf or grass has been used to replace natural grass on playing surfaces, in particular on sports fields e.g. football field. Polymer compositions useful for this application need to exhibit the necessary durability, resistance to fibrillation, resilience, UV and thermal stability and as well as a softness to prevent injury.

WO 07/107307 describes synthetic turf for grass field comprising individual filament yarns consisting essentially of a mixture of a high density polyethylene (HDPE) and a linear low density polyethylene (LLDPE).

JP 2007016367 describes threads for artificial grass mainly comprising 70 - 95 wt % of a high density polyethylene and 5 - 30 wt % of an ethylene-alpha-olefin copolymer having a density in the range 0.900 - 0.925 g/cm$^3$ obtained with a metallocene catalyst.

US 4880691 describes fibres and multifilaments derived from linear low density copolymers (LLDPE) of ethylene and alpha-olefins having 3 - 12 carbon atoms produced from Ziegler based catalysts. The copolymers typically have density in the range 0.86 to 0.95 g/cm$^3$ and melt index in the range 0.01 to 400 g/10 min.

WO 08/113566 and WO 08/113567 describe fibres, tapes or filaments comprising polyethylene compositions obtainable by use of single site catalysts wherein the polyethylene compositions have a density of less than 980 kg/m3 and preferably less than 975 kg/m3 . The polyethylene compositions are unimodal and preferably exhibit a melt index (2.16 kg) in the range 0.7 - 4.0 g and a Mw/Mn in the range 2 - 4 and are suitably prepared by use of bis(cyclopentadienyl) metallocene catalyst systems.

WO2009/101124 describes fibres, tapes and monofilaments based on ethylene copolymers with alpha-olefins, prepared in particular with monocyclopentadienyl catalyst systems, suitable for end-use applications including artificial grass. It does not however disclose any presence of long chain branching within the polyethylene. Not every single-site catalyst induces long chain branching. This can be seen in Figure 6, wherein a bis(n-butylcyclopentadienyl)zirconium dichloride catalyst does not provide any evidence of long chain branching. It behaves rheologically in the same manner as the Ziegler-Natta catalysed polyethylene, indicating that the polyethylene is linear.

EP 1 469 104 discloses monofilaments or stretched tapes, unwoven or woven into raffia, prepared with a polyethylene catalysed with either a bisindenyl, bistetrahydroindenyl or a biscyclopentadienyl metallocene, substituted or unsubstituted. Artificial grass is not disclosed as a possible application. There is no indication regarding the durability and relative softness of the polyethylene and in particular nothing is indicated regarding friction resulting with objects

such as balls.

WO2009/059971 discloses polyethylene resins prepared in a double loop reactor wherein the catalyst system comprises bis-tetrahydroindenyl and bis-indenyl catalyst components deposited on the same support. The polyethylene is only disclosed as being used for blown films. Artificial grass is not disclosed as a possible application.

The aforementioned metallocene derived copolymers are particularly suitable for the production of films and sheets prepared using traditional methods well known in the art. Examples of such methods are film blowing, film casting and orientation of the partially crystallised product. The films exhibit good processability, improved optical and mechanical properties and good heat sealing properties. However, for applications such as monofilaments and slit film to make artificial turf, suitable polymers require specific molecular structures in order to provide good strain-hardening and the required balances of melt strength and drawability, but also required are higher thermal stability and better ball roll, whilst maintaining or even improving durability.

An object of the invention is to provide a polyethylene that fulfills all of these requirements suitable to make artificial grass (also known as artificial turf). In particular, these requirements include longer durability, higher thermal stability (higher Vicat softening temperatures) and better ball roll.

SUMMARY OF THE INVENTION

We have now found that certain polyethylenes in particular those catalysed using bis-tetrahydroindenyl metallocenes polyethylenes exhibit outstanding properties in the solid state when submitted to high deformation or to mechanical stress. The polyethylenes thus obtained are particularly suitable for highly thermal or mechanical demanding applications like the preparation of slit film, monofilaments and the like for end-use applications in artificial grass and synthetic sport surfaces, woven and nonwoven fabrics etc.

The resultant slit film and monofilaments and the like exhibit improved tensile properties expressed as the balance between tenacity and elongation at break. In particular it has been found that the melt index of the polymers may be increased to the benefit of the product processability while maintaining the balance between thermal resistance and mechanical strength. In particular, the polyethylene according to the invention has a high Vicat Softening Temperature i.e. better thermal durability.

Thus according to a first aspect of the present invention there is provided a slit film or monofilament suitable for tufting into artificial grass prepared with a polyethylene prepared with a bistetrahydroindenyl or bisindenyl metallocene catalyst complex having (a) a density in the range of 0.910 to 0.940 g/cm$^3$, preferably 0.910 to 0.937 g/cm$^3$, as determined by ISO 1183 at a temperature of 23 °C and (b) a melt index MI2 in the range of 0.5 to 5 g/10 min as determined by ISO 1133/D at a temperature of 190° C and at a load of 2.16 kg, characterized in that said polyethylene has a $g_{rheo}$ of less than 0.9 or an LCBI of greater than 0.08. Preferably, the density of the polyethylene is in the range of 0.915 to 0.937 g/cm$^3$. In addition, preferably the polyethylene has a Vicat Softening Temperature $T_v$ measured according to ISO 306 conditions A120 (10N and 120°C) according to the following equation:

$$T_v > -41234\ d^2 + 77500\ d - 36295$$

wherein $T_v$ is the Vicat Softening Temperature in °C and d is the density of the polyethylene in g/cm$^3$.

Thus according to another aspect of the present invention there is provided an artificial grass tufted from a slit film or monofilament of a polyethylene prepared with a bistetrahydroindenyl (bis-THI) or bisindenyl (bis-IND) metallocene catalyst complex wherein the polyethylene has (a) a density in the range of 0.910 to 0.940 g/cm$^3$ as determined by ISO 1183 at a temperature of 23 °C, preferably of 0.910 to 0.937 g/cm$^3$, and (b) a melt index MI2 in the range of 0.5 to 5 g/10 min as determined by ISO 1133/D at a temperature of 190° C and at a load of 2.16 kg, characterized in that said polyethylene has a $g_{rheo}$ of less than 0.9 or an LCBI of greater than 0.08. Preferably, the density of the polyethylene is in the range of 0.915 to 0.937 g/cm$^3$. In addition, preferably the polyethylene has a Vicat Softening Temperature $T_v$ measured according to ISO 306 conditions A120 (10N and 120°C) according to the following equation:

$$T_v > -41234\ d^2 + 77500\ d - 36295$$

wherein $T_v$ is the Vicat Softening Temperature in °C and d is the density of the polyethylene in g/cm$^3$.

BRIEF DESCRIPTION OF THE FIGURES

Figure 1 is a graph showing the horizontal activation energy vs shear rate of a resin according to the invention (PE1) and of the market reference's resin (MR).

Figure 2 is a graph showing the Rheological dynamic analysis (RDA) i.e. complex viscosity vs frequency of a resin according to the invention (PE1) and of the market reference's resin (MR).

Figure 3 shows a Reimotec® Artificial Turf Monofilament machine schematic.

Figure 4 shows the C-shape yarn type and its dimensions.

Figure 5 shows a graph representing strength in N versus elongation in %

Figure 6 shows a graph of Rheological horizontal activation energy E*h versus reduced frequency $w/w_c$ of various resins prepared with different catalysts (THI= ethylene bis(tetrahydroindenyl)zirconium dichloride, ZN=Ziegler Natta, nBuCp = bis(n-butylcyclopentadienyl)zirconium dichloride, LDPE=high pressure prepared low density polyethylene) catalyst) showing how other catalysts e.g. ZN and other single-site metallocenes do not provide long chain branching.

Figure 7 shows a graph of Vicat Softening Temperature Tv versus density. The squares represent resins of the prior art. The diamonds represent resins of the present invention.

## DETAILED DESCRIPTION OF THE INVENTION

Preferably the polyethylene of the present invention has a unimodal molecular weight distribution, wherein only one peak is observed.

The polyethylene according to all aspects of the present invention preferably has an MWD that is represented by Mw/Mn of typically from 2 to 8, more typically of 3 to 8. The molecular weights are determined by Size Exclusion Chromatography (SEC) at high temperature (145°C). A 10 mg polyethylene sample is dissolved at 160°C in 10 ml of trichlorobenzene (technical grade) for 1 hour. Analytical conditions for the GPCV 2000 from WATERS are :

- Injection volume: +/- 400μl
- Automatic sample preparation and injector temperature: 160°C
- Column temperature: 145°C
- Detector temperature: 160°C
- Column set: 2 Shodex AT-806MS and 1 Styragel HT6E
- Flow rate: 1 ml/min
- Detector: Infrared detector (2800-3000 $cm^{-1}$)
- Calibration: Narrow standards of polystyrene (PS) (commercially available)
- Calculation of molecular weight $M_i$ of each fraction i of eluted polyethylene PE is based on the Mark-Houwink relation:

$$\log10(M_{PE}) = 0.965909 \log10(M_{PS}) - 0.28264;$$

(cut off on the low molecular weight end at $M_{PE}$ = 1000)

The most common molecular weight averages used in establishing molecular weight/property relationships are the number average (Mn), weight average (Mw), and z average (Mz) molecular weights. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight $M_i$. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

Preferably, the polyethylene of the present invention has a $g_{rheo}$, indicative of long chain branching, of less than 0.85. $g_{rheo}$ is equal to one for linear PE and decreases with increasing amount of LCB. It is observed that significant improvement prediction as function of molecular weight can be obtained by including effects of short chain branching (SCB) and molecular weight distribution (MWD). Therefore Mz, Mn and density corrections are included.

$g_{rheo}$ is therefore determined according to the disclosure in WO 2008/113680:

$$g_{rheo}(PE) = \frac{M_w(SEC)}{M_w(\eta_0, MWD, SCB)}$$

wherein $M_w$ (SEC) is the weight average molecular weight obtained from size exclusion chromatography expressed in kDa, as described above,

and wherein $M_w$ ($\eta_0$, MWD, SCB) is determined according to the following:

$$M_w(\eta_0, MWD, SCB) = \exp(1.7789 + 0.199769 LnM_n + 0.209026(Ln\eta_0) + 0.955(\ln\rho) - 0.007561(LnM_z)(Ln\eta_0) + 0.02355(\ln M_z)^2)$$

Number- and z-average molecular weights, Mn and Mz expressed in kDa, are obtained from size exclusion chromatography as described above.

Density $\rho$ is measured in g/cm$^3$ and measured according to ISO 1183 at a temperature of 23 °C.

Zero shear viscosity $\eta_0$ in Pa.s is obtained from a frequency sweep experiment combined with a creep experiment, in order to extend the frequency range to values down to $10^{-4}$ $s^{-1}$ or lower, and taking the usual assumption of equivalence of angular frequency (rad/s) and shear rate. Zero shear viscosity $\eta_0$ is estimated by fitting with Carreau-Yasuda flow curve ($\eta$-W) at a temperature of 190°C, obtained by oscillatory shear rheology on ARES equipment (manufactured by TA Instruments) in the linear viscoelasticity domain. Circular frequency (W in rad/s) varies from 0.05-0.1 rad/s to 250-500 rad/s, typically 0.1 to 250 rad/s, and the shear strain is typically 10 %. In practice, the creep experiment is carried out at a temperature of 190°C under nitrogen atmosphere with a stress level such that after 1200 s the total strain is less than 20 %. The apparatus used is an ARG2 manufactured by TA instruments.

The intrinsic viscosity inferred from rheology can thus be expressed using the Carreau-Yasuda equation:

$$\eta = \eta_0 / (1 + (W * \tau)^b)^{((1-n)/b)}$$

wherein parameters $\tau$, b and n are fitting parameters called respectively 'relaxation time', 'breadth parameter' and 'power-law parameter', which are obtained using non-linear regression with standard software such as SigmaPlot® version 10 or the Excel® Solver function. From this $\eta_0$ in Pa.s can thus be obtained and used in the equation for Mw ($\eta_0$, MWD, SCB) provided above.

Alternative from the literature: LCBI

The long chain branching can also be represented by LCBI, although it does not take into account the effects of molecular weight distribution and also short chain branching (comonomer content). A $g_{rheo}$ of less than 0.9 is the same as an LCBI of greater than 0.08. A preferred $g_{rheo}$ of less than 0.85 is the same as an LCBI of greater than 0.13.

LCBI can be determined as introduced by Shroff and Mavridis (R. N. Shroff and H. Mavridis, Macromolecules,

32, 8454 (1999)). It is defined as the ratio of intrinsic viscosities of PE resins estimated by rheology to that determined via solution techniques.

$$LCBI = \frac{[\eta]_{rheo}}{[\eta]_{sol}} - 1$$

wherein $[\eta]_{rheo}$ and $[\eta]_{sol}$ are the intrinsic viscosities obtained respectively from rheology or via solution.

Thus, LCBI is zero for linear samples and is above zero for polyethylene containing long chain branching. Instead of determining intrinsic viscosity from the relative viscosity at 0.2 dg/min as explained in the publication of Shroff and Mavridis, intrinsic viscosity value is calculated here via solution (expressed in dl/g) in terms of weight average molecular weight $M_w$ (expressed in Da) obtained by size exclusion chromatography (SEC) (obtained as described above) with equation:

$$[\eta]_{sol} = 5.25 * 10^{-4} (M_w)^{0.76}$$

*For the intrinsic viscosity obtained from rheology:*

Zero shear viscosity $\eta_0$, expressed in Pa.s, is also related to the weight average molecular weight $M_w$,expressed in Da, by equation

$$\eta_0 = 4.4927 * 10^{-16} (M_w)^{3.8412}$$

This equation was derived with 50 linear PE samples, both metallocene and Ziegler-Natta catalysed polyethylene, with $M_w$ ranging from 30 to 700 kg/mol (kDa), MWD values from 2 to 25 and density from 0.87 to 0.965 g/cm$^3$. When this equation is solved for $M_w$ as a function of $\eta_0$, the definition for $M_w$ can be used in the Shroff and Mavridis equation above to obtain the intrinsic viscosity obtained from rheology:

$$[\eta]_{rheo} = 0.572 * (\eta_0)^{0.1979}$$

Note that the Zero shear viscosity $\eta_0$ is estimated by fitting with a Carreau-Yasuda flow curve ($\eta$-W) exactly as described above for $g_{rheo}$.

The LCBI is thus determined as:

$$LCBI = \frac{0.572 * (\eta_0)^{0.1979}}{5.25 * 10^{-4} (M_w)^{0.76}} - 1$$

wherein $\eta_0$ is the zero shear viscosity in Pa.s, obtained as described above and $M_w$ is the weight average molecular weight in Da, obtained as described above.

LCBI and $g_{rheo}$ are also linked mathematically (for $g_{rheo}$ from 0.7 to 1):

$$LCBI = \exp(-0.76 \ln(g_{rheo})) - 1$$

The polyethylene of the present invention preferably has a density from 0.910 to 0.937 g/cm$^3$, more preferably 0.915 to 0.937 g/cm$^3$, more preferably from 0.915 to 0.935 g/cm$^3$, even more preferably from 0.918 to 0.935 g/cm$^3$, even more preferably from 0.920 to 0.935 g/cm$^3$, most preferably between 0.923 to 0.934 g/cm$^3$.

Preferably, the polyethylene of the present invention has a MI2 of from 0.7 to 4 g/10min, more preferably from 0.8 to 3.5 g/10min, most preferably from 0.9 to 3.4 g/10min.

The polyethylene according to the invention has particular rheological properties due to its long chain branching.

Preferably, the polyethylene has a rheological horizontal activation energy of more than 40 kJ/mol at a frequency of $1s^{-1}$ and a rheological horizontal activation energy of less than 40 kJ/mol at a frequency of $100s^{-1}$. More preferably, the polyethylene has a rheological horizontal activation energy of more than 45 kJ/mol at a frequency of $1s^{-1}$ and a rheological horizontal activation energy of less than 40 kJ/mol at a frequency of $100s^{-1}$. This can be seen in Figure 1. Rheological horizontal activation energy is measured on a Rheometrics® ARES rheometer at 170, 190 and 210°C by inducing shear deformation within the linear viscoelastic regime (at 10% deformation) and recording complex viscosity at different shear rates.

Preferably, the polyethylene of the invention is an ethylene alpha-olefin copolymer, wherein the alpha-olefin has from 4 to 12 carbon atoms. Most preferred alpha-olefins are 1-butene, 1-hexene, 4-methyl-l-pentene and 1-octene, most preferably 1-hexene. Preferably, the polyethylene has a comonomer content, preferably 1-hexene, of less than 30wt%, more preferably of less than 20wt%, even more preferably of less than 15wt%, and most preferably of less than 10wt%.

The metallocene is selected from at least one of the following formula bis-IND (I) or bis-THI (II):

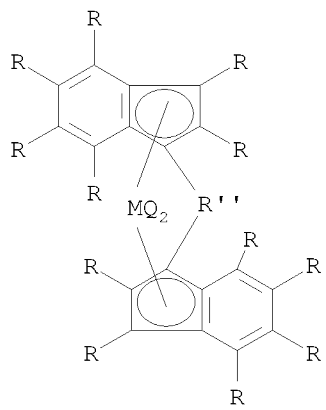

(I)

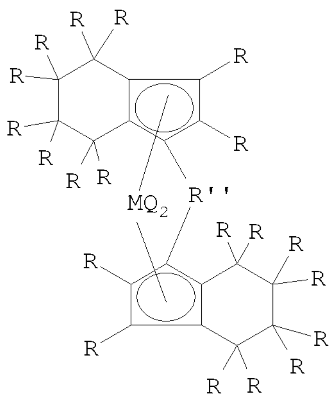

(II)

wherein each R is the same or different and is selected from hydrogen or $XR'_v$ in which X is chosen from carbon, silicon, germanium, oxygen or nitrogen, and each R' is the same or different and is chosen from hydrogen or a hydrocarbyl of from 1 to 20 carbon atoms and v+1 is the valence of X, R being preferably selected from hydrogen, methyl, ethyl, n-propyl, isopropyl, n-butyl and tert-butyl;

R" is a structural bridge between the two indenyl or tetrahydroindenyls to impart stereorigidity that comprises a $C_1$-$C_4$ alkylene radical, a dialkyl germanium, silicon or siloxane, or an alkyl phosphine or amine radical;

Q is a hydrocarbyl radical having from 1 to 20 carbon atoms or a halogen, preferably chlorine or fluorine; and M is a transition metal Group 4 of the Periodic Table or vanadium.

Most preferred complexes are those wherein M is zirconium, titanium or hafnium, preferably zirconium.

Each indenyl or tetrahydroindenyl component may be substituted with R in the same way or differently from one another at one or more positions on the cyclopentadienyl ring or on the cyclohexenyl ring. Each substituent is independently chosen.

If the cyclopentadienyl ring is substituted, its substituent groups must not be so bulky as to affect coordination of the olefin monomer to the metal M. Any substituents XR'v on the cyclopentadienyl ring are preferably methyl. More

preferably, at least one and most preferably both cyclopentadienyl rings are unsubstituted.

In a particularly preferred embodiment, the metallocene comprises a bridged unsubstituted bis-indenyl or bis-tetrahydroindenyl i.e. all R are hydrogens. More preferably, the metallocene comprises a bridged unsubstituted bis-tetrahydroindenyl.

Most preferably, the metallocene is ethylene-bis(tetrahydroindenyl)zirconium dichloride or ethylene-bis(tetrahydroindenyl) zirconium difluoride .

Suitable activating agents for use in the preparation of the polyethylene of the present invention are those having an ionising action typically used with the aforementioned metallocene complexes. These include aluminoxanes such as methyl aluminoxane (MAO) and fluorinated MAO, boranes such as tris(pentafluorophenyl) borane and borates. Other suitable activating agents are well known in the art include aluminium alkyls, in particular one or more of TIBAL, TEAL or TNOAL.

Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon. The catalysts used to prepare the copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts of the present invention is silica. Preferably the support is silica, a modified silica alumina or a modified silica, for example MAO-modified silica or a fluorinated silica support.

Polymerisable monomers suitable for use in this aspect of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene. Most preferably, the invention covers ethylene polymerisation with 1-hexene as the comonomer.

The polymerisation of the polyethylene can be carried out in the slurry phase. Slurry polymerisation is preferably used to prepare the high density polyethylene. The polymerisation temperature ranges from 20 to 125 °C, preferably from 55 to 105°C, more preferably from 60 to 100°C and most preferably from 65 to 98°C and the pressure ranges from 0.1 to 10 MPa, preferably from 1 to 6 MPa, more preferably from 2 to 4.5 MPa, for a time ranging from 10 minutes to 6 hours, preferably from 1 to 3 hours, most preferably from 1 to 2.5 hours. Preferably, the polymerisation is carried out in a liquid full loop reactor or even two liquid full loop reactors connected in series.

The polyethylene for the slit film and monofilaments for the artificial grass of the present invention may additionally contain usual additives well known to those skilled in the art such as antioxidants, stabilizers, processing aids, fillers, flame retardants, coloured pigments or similar. These additives may be present in quantities generally between 0.01 and 15 weight % based on the weight of the polyethylene.

The present invention is particularly directed to the yarn (slit film and monofilaments) suitable for use in artificial turfs or grasses including synthetic sporting surfaces.

The slit film or monofilament or similar according to all aspects of the present invention may typically be in stretched form.

The slit film or monofilament or similar according to all aspects of the present invention may have a draw ratio in the range 1: 3 to 1:8, preferably 1:3 to 1:6, more preferably 1:3 to 1:4.

According to another aspect of the present invention the artificial grass tufted with the monofilaments or slit film according to the invention, have similar processing behaviour to Ziegler-Natta copolymers of ethylene and 1-octene, which are conventionally used. In addition the ball roll is almost similar to natural grass, with a much softer feel and a higher durability.

The yarn (monofilaments and slit films) obtainable from the polyethylene prepared using metallocene catalyst system according to the invention, exhibit similar compromise between tenacity and elongation at break as those prepared from traditional Ziegler Natta catalysts and 1-octene comonomer, but at lower density, thereby enabling the final yarn to be softer and therefore advantageous for artificial grass applications.

Alternatively the melt index of the copolymers produced with the bis-THI or bis-IND metallocenes can be increased to the benefit of the product processability while maintaining a similar balance between tenacity and elongation at break.

EXAMPLES

Ethylene with 1-hexene as comonomer (at 3wt%) were polymerized according to the invention using ethylene-bis(tetrahydroindenyl)zirconium dichloride as the metallocene catalyst in a slurry polymerisation process in a liquid full loop reactor to provide a polyethylene PE1 having the following properties:

- a density of 0.934g/cm$^3$ as measured according to ISO 1183 at 23°C
- an MI2 of 3.1 as measured according to ISO 1133/D at 190°C under a load of 2.16 kg
- an Mn of 24 kg/mol (kDa), Mw of 62 kg/mol (kDa) and an Mz of 112 kg/mol (kDa)
- $g_{rheo}$ of 0.81 *(which is the same as an LCBI of 0.17)*
- At a shear rate of 1s$^{-1}$, the horizontal activation energy is at 46.6 kJ/mol (See Fig.1)
- At a shear rate of 100s$^{-1}$, the horizontal activation energy is at 36.1 kJ/mol (See Fig.1)
- Vicat Softening Temperature 121.3 °C measured according to ISO 306 with conditions A120 (10N, 120°C/h)
- Vicat Softening Temperature of 121.3°C measured according to ISO 306 with conditions A120 (10N, 120°C/h) The formula $T_v$> - 41234 d$^2$ + 77500 d - 36295 wherein $T_v$ is the Vicat Softening Temperature (in °C) and d is the density (in g/cm$^3$) is thus fulfilled
- Antioxidants package: Irgafos 168, Irganox 1010
- Antiacid: NONE REQUIRED

This polyethylene PE1 was tested against a Ziegler-Natta catalysed LLDPE- 1-octene (4.9wt%) copolymer MR, the Market Reference, having the following properties

- a density of 0.935 g/cm$^3$
- an MI2 of 2.5 g/10min
- an Mn 23 kg/mol (kDa), Mw of 80 kg/mol (kDa) and an Mz of 228 kg/mol (kDa)
- $g_{rheo}$ of 0.96 *(which is the same as an LCBI of 0.03)*
- At a shear rate of 1s$^{-1}$, the horizontal activation energy is at 31.7 kJ/mol (See Fig.1)
- At a shear rate of 100s$^{-1}$, the horizontal activation energy is at 29.1 kJ/mol (See Fig.1)
- Vicat Softening Temperature of 117.1 °C measured according to ISO 306 with conditions A120 (10N, 120°C/h) The formula $T_v$> - 41234 d$^2$ + 77500 d - 36295 wherein $T_v$ is the Vicat Softening Temperature (in °C) and d is the density (in g/cm$^3$) is NOT fulfilled
- Antioxidants package: Irgafos 168, Irganox 1010, Irganox 1076,
- Antiacid: Calcium stearate

The $g_{rheo}$ and shear rate responses are indicative of sparse long chain branching, preferably distributed over the highest molecular weight chains.

Figure 7 shows a graph of Vicat Softening Temperature Tv versus density. The squares represent resins of the prior art. The diamonds represent resins of the present invention. It can be seen the resins of the present invention have a higher Vicat Softening Temperature Tv at the same density of resins of the prior art.

The following line setup was used to prepare the monofilaments of PE1 and comparative MR on a Reimotec Artificial Turf Monofilament machine (see Fig.3) :

- 30 strands emerging from 1 die
- Yarn type: C shape (See Fig. 4)
- Output 50 kg/h fixed by gear pump
- Versatile 60 mm screw with enhanced feeding zone
- Line speed 155 m/min
- Water cooling bath
- 3 stretching ovens: first 2 were using hot water, last one was left open
- Total draw ratio between 3 and 4
- Titre 1900 dtex
- 2 yarns per bobbin
- Colour & anti-UV masterbatch 491 from BASF (6 % added)
- PPA from Schulman (AMF 705 - 1% added)

It was observed that the extruder back pressure dropped by 15% from 65 to 55 bar from the MR comparative to the PE1 polyethylene. Thus processability of the polyethylene according to the invention is easier than the comparative resin. This allows for longer production runs and lower maintenance frequency of the machines. Or in the alternative, the extrusion temperature can be reduced, thereby saving energy.

Without being bound by theory, the ease of processing is probably attributable to the shear thinning induced by the long chain branching. This is also demonstrated in the Rheological dynamic analysis (RDA). Despite the narrower MWD of PE1, it still has a lower complex viscosity behavior due to the presence of long chain branching.

Both samples appear to have similar shrinkage (~9% in hot water and ~2% in hot air), however, PE1 yarn has slightly higher tenacity and elongation at break (Fig. 5 which shows strength in N versus elongation in %)

The monofilaments thus obtained were twisted (6 monofilaments wrapped around each other), then tufted into artificial grass using 15kg/m2 of granulated SBR 0.5 - 2 mm (from Monkton Rubber Ltd) and 15 kg/m2 of rounded sand 0.2-0.8mm (from Garside Sands Ltd) and finally tested according to FIFA 2* testing requirements, including mechanical wear tests of 20,200 cycles on a Lisport® machine. The following results were observed as tested according to *the* Handbook for Test Methods for Football Turf (2009 editi*on):*

| **PRODUCT IDENTIFICATION** | | | | |
|---|---|---|---|---|
| Monofilament material | | | **MR** | **PE1** |
| Mass per unit area | | [g/m$^2$] | 2702 | 2554 |
| Tufts per unit area | | [m$^{-2}$] | 16.7 | 16.7 |
| Pile length | | [mm] | 59 | 56 |
| Pile weight | | [g/m$^2$] | 1403 | 1451 |
| **CARPET PROPERTIES** | | | | |
| Tuft withdrawal force | | [N] | 18 | 20 |
| Water permeability of carpet | | [mm/h] | 4155 | 5176 |
| Water permeability of system | | [mm/h] | 2162 | 2149 |
| Vertical ball rebound EN 12335 | Dry | [m] | 0.80 | 0.91 |
| | Wet | [m] | 0.93 | 0.98 |
| | After wear | [m] | 0.99 | 0.96 |
| Angle ball rebound | Dry | | 52% | 55% |
| | Wet | | 76% | 76% |

| **PRODUCT IDENTIFICATION** | | | | |
|---|---|---|---|---|
| Monofilament material | | | **MR** | **PE1** |
| Ball roll | Dry | [m] | 6.8 | 6.5 |
| | Wet | [m] | 7.1 | 7.0 |
| Shock absorption EN 14808 | Dry | | 65% | 65% |
| | Wet | | 63% | 62% |
| | After wear | | 56% | 53% |
| | - 5°C | | 66% | 60% |
| | 40 °C | | 65% | 66% |
| Vertical Deformation EN 15301-1 using studded test foot | Dry | [mm] | 8.0 | 7.5 |
| | Wet | [mm] | 8.0 | 7.5 |
| | After wear | [mm] | 6.0 | 5.0 |
| Rotational resistance EN 14809 | Dry | [N.m] | 37 | 39 |
| | Wet | [N.m] | 37 | 36 |
| | After wear | [N.m] | 34 | 40 |
| Linear stud deceleration value | Dry | [g] | 4.0 | 3.4 |
| | Wet | [g] | 4.1 | 3.9 |
| Linear stud slide value | Dry | | 175 | 160 |
| | Wet | | 195 | 182 |

(continued)

| PRODUCT IDENTIFICATION | | | | |
|---|---|---|---|---|
| Monofilament material | | | **MR** | **PE1** |
| Skin / surface friction | Dry | [μ] | 0.67 | 0.58 |
| Skin abrasion | Dry | | 24% | 15% |
| Carpet tuft withdrawal | | [N] | 18 | 20 |
| | After ageing | [N] | 14 | 16 |
| UV resistance | | | pass | pass |
| Visual deterioration after | Cycles | | 30,000 | 60,000 |

The effects of simulated wear ("After wear" as given in the table) were measured after 20,200 cycles on a Lisport® machine.

The PE1 polyethylene tufted monofilaments as artificial grass shows:

- Lower dry ball roll replicates more accurately the behaviour of natural grass
- Lower values for skin / surface friction and skin abrasion indicate a softer feel - despite being at a higher density than MR
- Extended Lisport testing revealed no degradation before 60,000 cycles, which is twice that of MR
- Less low molecular weight species and absence of calcium stearate eliminate the risk of water carry-over and lead to less die deposit, allowing for longer production runs (longer intervals between maintenance, i.e. when the die and filters have to be cleaned).
- Longer thermal durability due to the higher Vicat softening temperature

## Claims

1. Artificial grass tufted from slit film or monofilaments prepared with a polyethylene prepared with a bistetrahydroindenyl or bisindenyl metallocene catalyst complex having (a) a density in the range of 0.910 to 0.937 g/cm$^3$ as determined by ISO 1183 at a temperature of 23 °C and (b) a melt index MI2 in the range of 0.5 to 5 g/10 min as determined by ISO 1133/D at a temperature of 190° C and at a load of 2.16 kg,
wherein said polyethylene has a $g_{rheo}$ of less than 0.9 or an LCBI of greater than 0.08,
and wherein the polyethylene has a Vicat Softening Temperature $T_v$, measured according to ISO 306 conditions A120, according to the following equation:

$$T_v > -41234\, d^2 + 77500\, d - 36295$$

wherein $T_v$ is the Vicat Softening Temperature in °C and d is the density of the polyethylene in g/cm$^3$.

2. Artificial grass according to claim 1 wherein the polyethylene has a $g_{rheo}$ of less than 0.85 or an LCBI of greater than 0.13.

3. Artificial grass according to claim 1 or 2 wherein the polyethylene has a MI2 of 0.7 to 3.5 g/10min.

4. Artificial grass according to any one of the preceding claims wherein the polyethylene has a density of 0.910 to 0.935 g/cm$^3$.

5. Artificial grass according to any one of the preceding claims wherein the rheological horizontal activation energy of the polyethylene at a frequency of 1s$^{-1}$ is greater than 40kJ/mol and at a frequency of 100s$^{-1}$ is less than 40 kJ/mol.

6. Artificial grass according to claim 5 wherein the rheological horizontal activation energy of the polyethylene at a frequency of 1s$^{-1}$ is greater than 45kJ/mol.

7. Artificial grass according to any of the preceding claims wherein the polyethylene is a copolymer of ethylene and 1-hexene comonomer.

8. Artificial grass according to claim 7 wherein the polyethylene has a 1-hexene content of less than 10wt%.

9. Artificial grass according to any of the preceding claims being in a stretched form.

10. Artificial grass according to claim 9 having a draw ratio in the range 1:3 to 1:10 and preferably 1:4 to 1:10.

11. The artificial grass according to any one of the preceding claims wherein the grass has a durability of at least 60,000 cycles as measured on a Lisport® machine.

**Patentansprüche**

1. Kunstrasen, getuftet aus Flachfaden oder Monofilamenten, die mit einem Polyethylen hergestellt sind, das mit einem Bistetrahydroindenyl- oder Bisindenyl-Metallocen-Katalysatorkomplex mit (a) einer Dichte im Bereich von 0,910 bis 0,937 g/cm$^3$, bestimmt nach ISO 1183 bei einer Temperatur von 23 °C, und (b) einem Schmelzindex MI2 im Bereich von 0,5 bis 5 g/10 min, bestimmt nach ISO 1133/D bei einer Temperatur von 190 °C und einer Last von 2,16 kg hergestellt ist,
wobei das Polyethylen einen $g_{rheo}$-Wert von weniger als 0,9 oder einen LCBI von mehr als 0,08 aufweist,
und wobei das Polyethylen eine Vicat-Erweichungstemperatur $T_v$ aufweist, gemessen gemäß ISO-306-Bedingungen A120 gemäß der folgenden Gleichung:

$$T_v > -41234\ d^2 + 77500\ d - 36295$$

worin $T_v$ die Vicat-Erweichungstemperatur in °C ist und d die Dichte des Polyethylens in g/cm$^3$ ist.

2. Kunstrasen nach Anspruch 1, wobei das Polyethylen einen $g_{rheo}$-Wert von weniger als 0,85 oder einen LCBI von mehr als 0,13 aufweist.

3. Kunstrasen nach Anspruch 1 oder 2, wobei das Polyethylen einen MI2 von 0,7 bis 3,5 g/10 min aufweist.

4. Kunstrasen nach einem der vorhergehenden Ansprüche, wobei das Polyethylen eine Dichte von 0,910 bis 0,935 g/cm$^3$ aufweist.

5. Kunstrasen nach einem der vorhergehenden Ansprüche, wobei die rheologische horizontale Aktivierungsenergie des Polyethylens bei einer Frequenz von 1 s$^{-1}$ größer als 40 kJ/mol ist und bei einer Frequenz von 100 s$^{-1}$ kleiner als 40 kJ/mol ist.

6. Kunstrasen nach Anspruch 5, wobei die rheologische horizontale Aktivierungsenergie des Polyethylens bei einer Frequenz von 1 s$^{-1}$ größer als 45 kJ/mol ist.

7. Kunstrasen nach einem der vorhergehenden Ansprüche, wobei das Polyethylen ein Copolymer von Ethylen und 1-Hexen-Comonomer ist.

8. Kunstrasen nach Anspruch 7, wobei das Polyethylen einen 1-Hexen-Gehalt von weniger als 10 Gew.-% aufweist.

9. Kunstrasen nach einem der vorhergehenden Ansprüche in gestreckter Form.

10. Kunstrasen nach Anspruch 9 mit einem Streckverhältnis im Bereich von 1:3 bis 1:10 und vorzugsweise 1:4 bis 1:10.

11. Kunstrasen nach einem der vorhergehenden Ansprüche, wobei der Rasen eine Haltbarkeit von mindestens 60.000 Zyklen aufweist, gemessen mit einer Lisport®-Maschine.

## Revendications

**1.** Gazon artificiel tufté à partir de monofilaments ou de films fendus préparés à partir d'un polyéthylène préparé avec un complexe catalytique de bistétrahydro-indényle ou de bisindényle métallocène ayant (a) une densité dans la plage de 0,910 à 0,937 g/cm$^3$ déterminée selon la norme ISO 1183 à une température de 23 °C et (b) un indice de fluidité à l'état fondu MI2 compris entre 0,5 et 5 g/10 min, déterminé selon la norme ISO 1133/D, à une température de 190 °C et à une charge de 2,16 kg,
dans lequel ledit polyéthylène présente un $g_{rhéo}$ inférieur à 0,9 ou un LCBI supérieur à 0,08
et dans lequel le polyéthylène a un point de ramollissement Vicat $T_v$, mesuré conformément aux conditions ISO 306 A120, selon l'équation suivante :

$$T_v > - 41\,234\ d^2 + 77\,500\ d - 36\,295$$

dans laquelle $T_v$ représente la température de ramollissement Vicat en °C et où d représente la densité du polyéthylène en g/cm$^3$.

**2.** Gazon artificiel selon la revendication 1, dans lequel le polyéthylène présente un $g_{rhéo}$ inférieur à 0,85 ou un LCBI supérieur à 0,13.

**3.** Gazon artificiel selon la revendication 1 ou 2, dans lequel le polyéthylène présente un MI2 de 0,7 à 3,5 g/10 min.

**4.** Gazon artificiel selon l'une quelconque des revendications précédentes, dans lequel le polyéthylène présente une densité de 0,910 à 0,935 g/cm$^3$.

**5.** Gazon artificiel selon l'une quelconque des revendications précédentes, l'énergie d'activation horizontale rhéologique du polyéthylène à une fréquence de 1 s$^{-1}$ étant supérieure à 40 kJ/mol et inférieure à 40 kJ/mol à une fréquence de 100 s$^{-1}$.

**6.** Gazon artificiel selon la revendication 5, l'énergie d'activation horizontale rhéologique du polyéthylène à une fréquence de 1 s$^{-1}$ étant supérieure à 45 kJ/mol.

**7.** Gazon artificiel selon l'une quelconque des revendications précédentes, dans lequel le polyéthylène est un copolymère d'éthylène et de comonomère à base de 1-hexène.

**8.** Gazon artificiel selon la revendication 7, dans lequel le polyéthylène a une teneur en 1-hexène inférieure à 10 % en poids.

**9.** Gazon artificiel selon l'une quelconque des revendications précédentes, se présentant sous une forme étirée.

**10.** Gazon artificiel selon la revendication 9, dont le rapport d'étirement est compris entre 1 :3 et 1:10 et de préférence entre 1:4 et 1:10.

**11.** Gazon artificiel selon l'une quelconque des revendications précédentes, le gazon ayant une durabilité d'au moins 60 000 cycles telle que mesurée sur une machine Lisport®.

Fig. 1

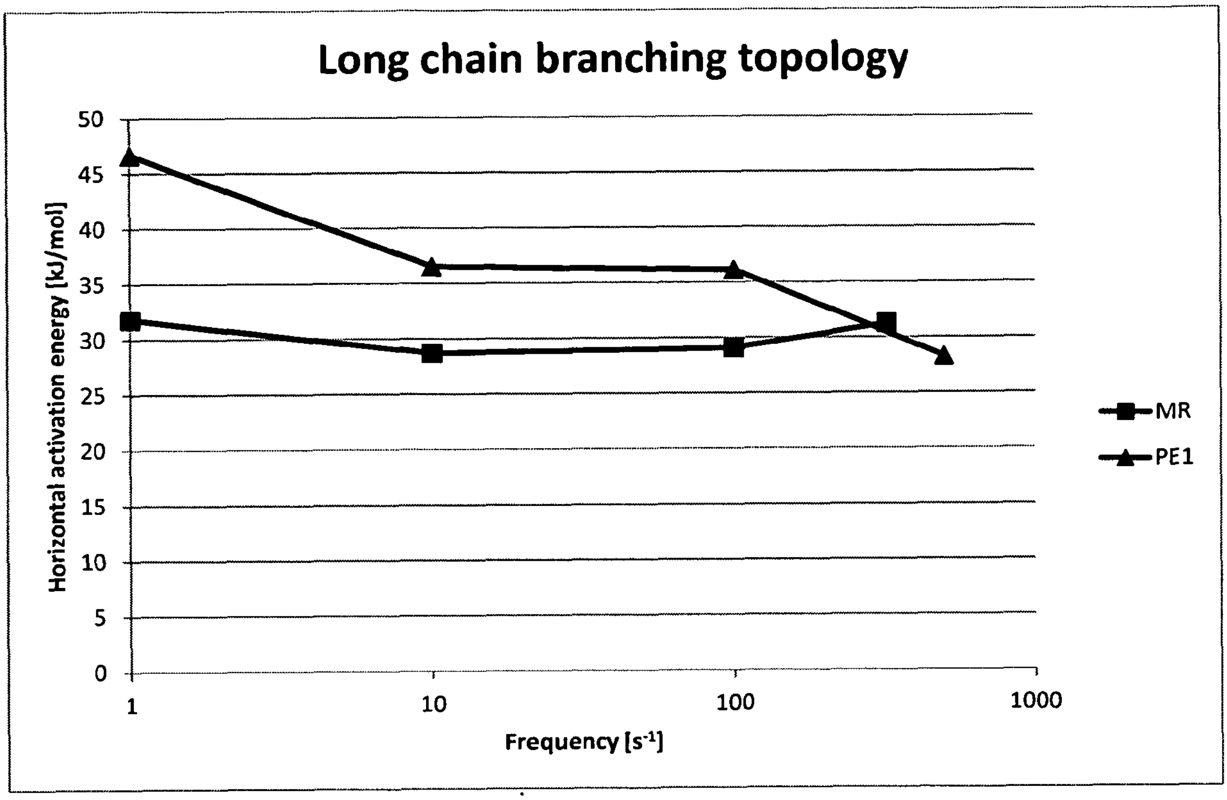
Long chain branching topology
Horizontal activation energy [kJ/mol]
50
45
40
35
30
25
20
15
10
5
0
1
10
100
1000
Frequency [s-1]
MR
PE1

Fig. 2

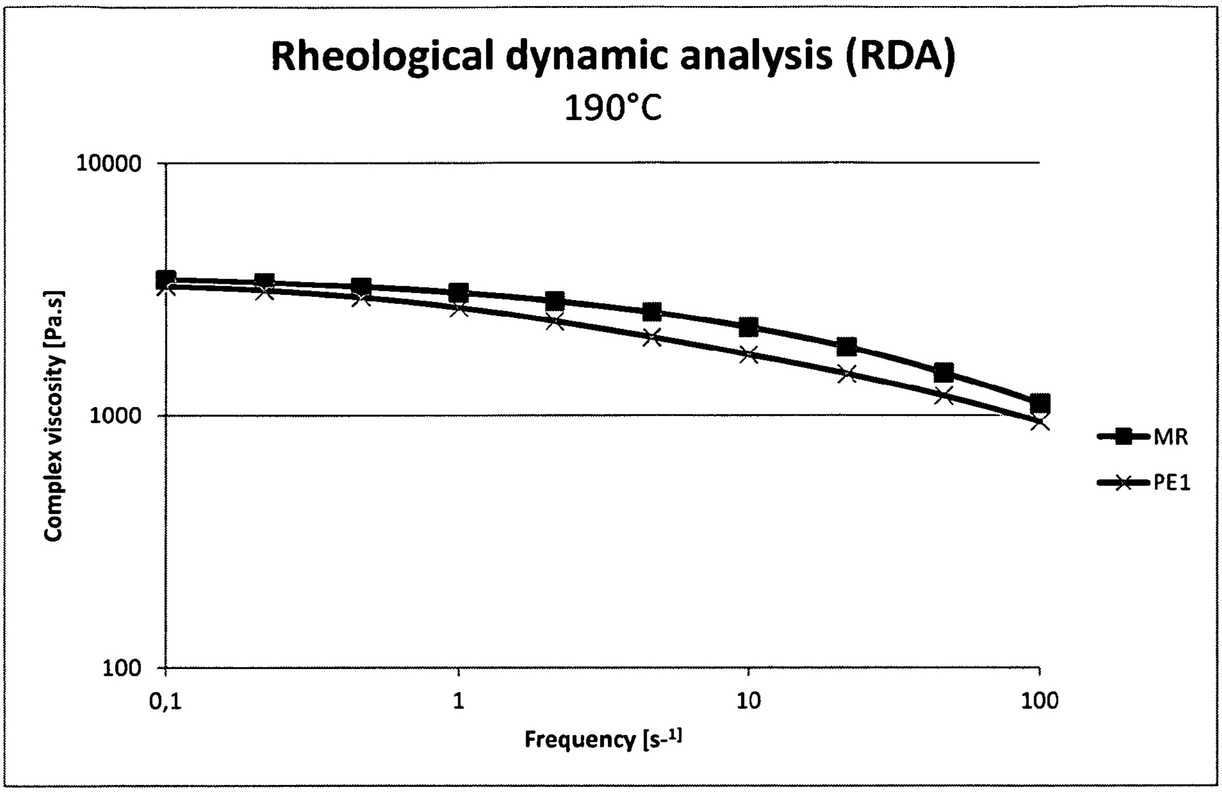
Rheological dynamic analysis (RDA)
190°C
10000
1000
100
Complex viscosity [Pa.s]
0,1
1
10
100
Frequency [s-1]
MR
PE1

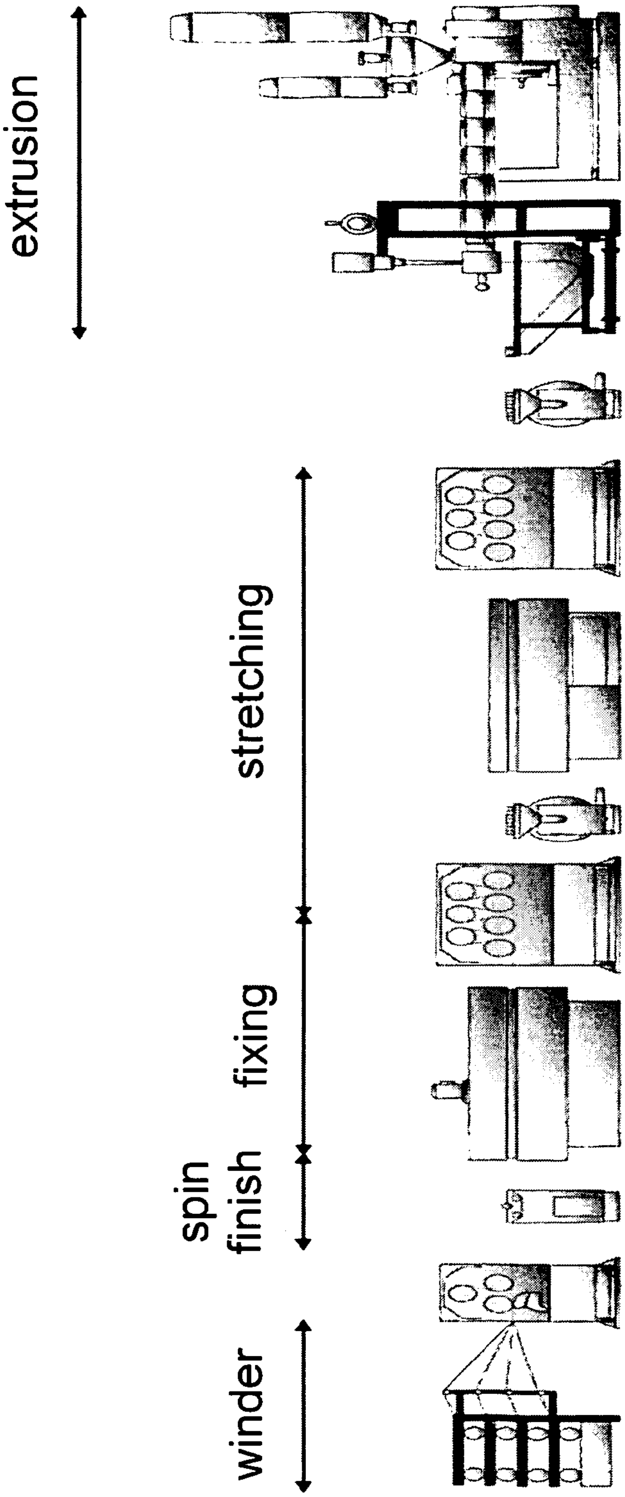


Fig. 3

Fig. 4

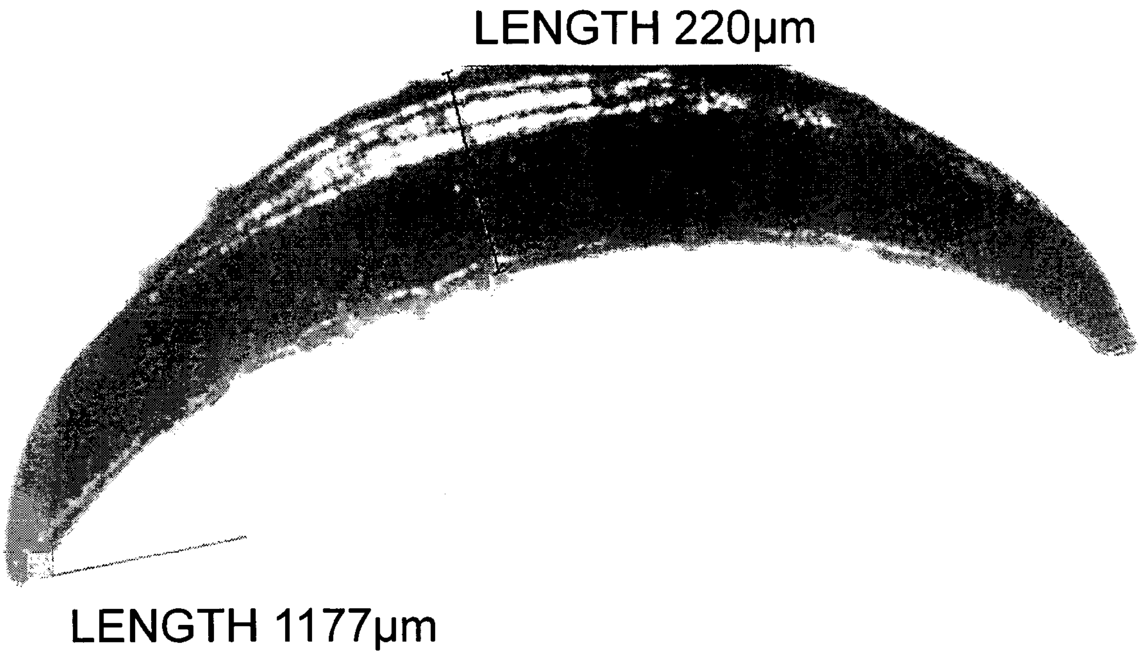

Fig. 5

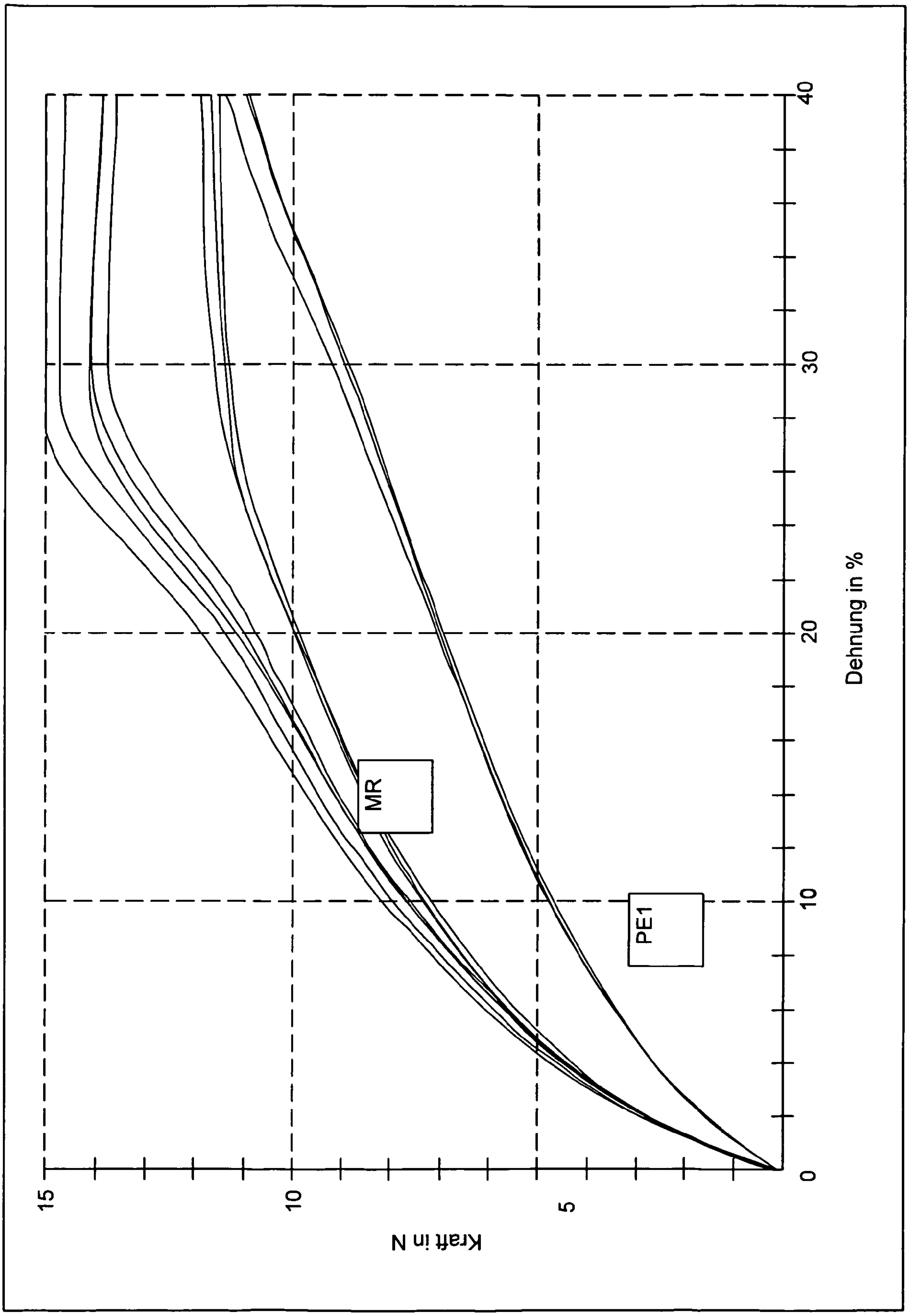

Fig. 6

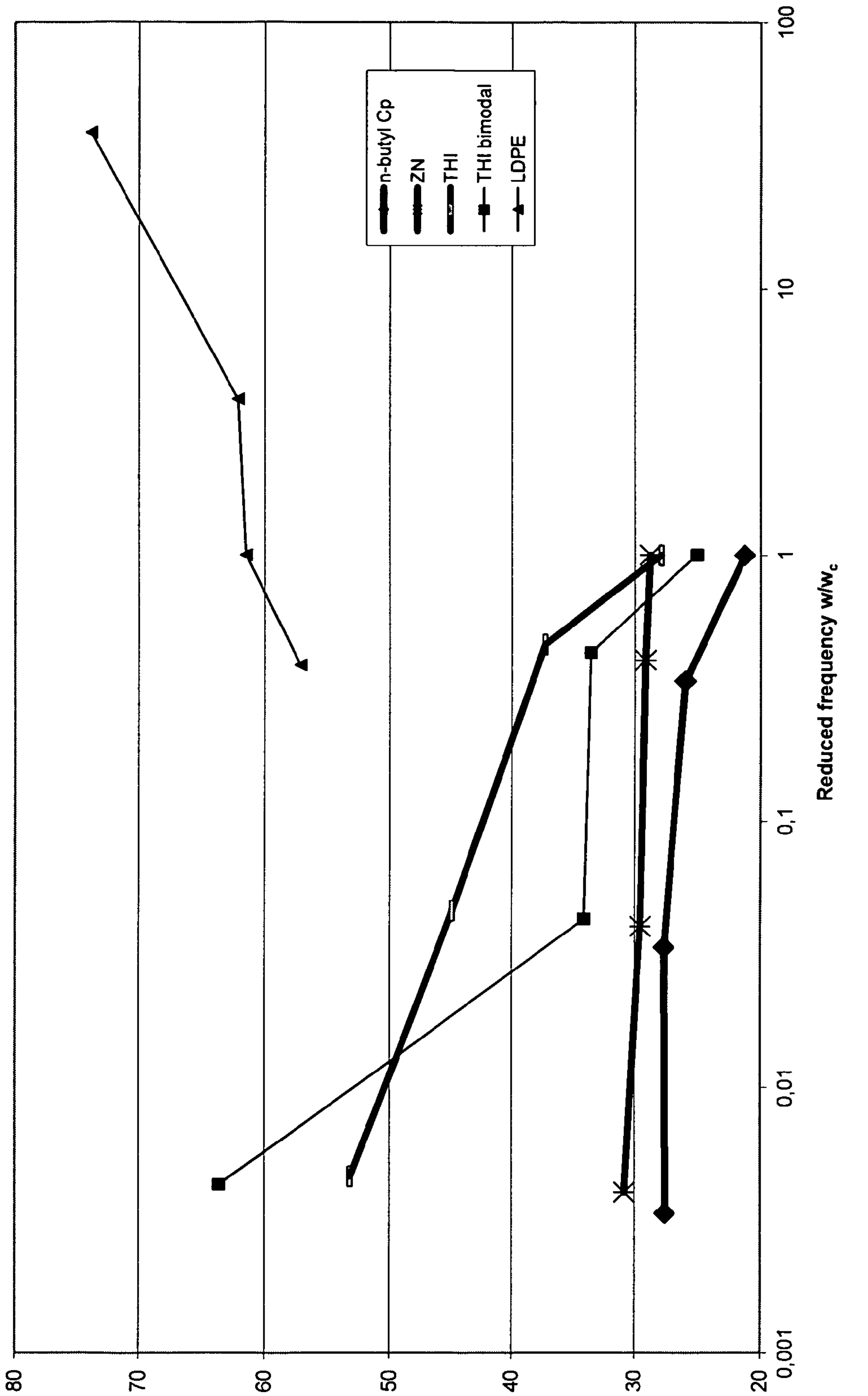
Rheological horizontal activation energy E*h
80
70
60
50
40
30
20
0,001
0,01
0,1
1
10
100
Reduced frequency w/wc
n-butyl Cp
ZN
THI
THI bimodal
LDPE

Fig. 7

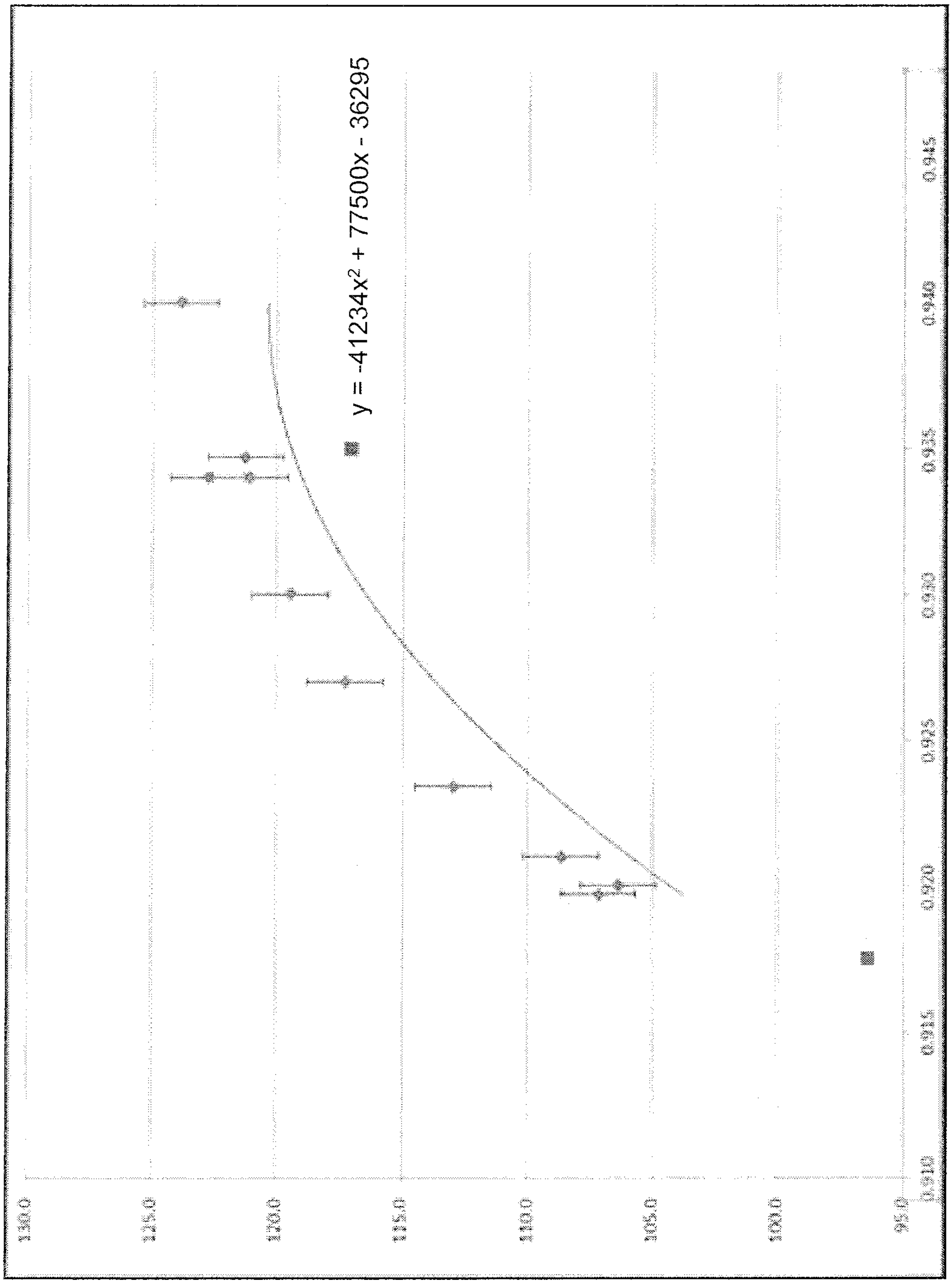
y = -41234x² + 77500x - 36295
130.0
125.0
120.0
115.0
110.0
105.0
100.0
95.0
0.910
0.915
0.920
0.925
0.930
0.935
0.940
0.945

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 07107307 A
- JP 2007016367 B
- US 4880691 A
- WO 08113566 A
- WO 08113567 A
- WO 2009101124 A
- EP 1469104 A
- WO 2009059971 A
- WO 2008113680 A


### Non-patent literature cited in the description


- **R. N. SHROFF ; H. MAVRIDIS.** *Macromolecules,* 1999, vol. 32, 8454
- Handbook for Test Methods for Football Turf. 2009